# EUROPÄISCHE PATENTSCHRIFT

(11) **EP 2 767 455 B1**
(45) Veröffentlichungstag und Bekanntmachung des Hinweises auf die Patenterteilung: **07.08.2019**
(21) Anmeldenummer: 13004497.7
(22) Anmeldetag: 14.09.2013
(51) Int. Cl.: B62D 7/14, B62D 13/02, B62D 5/06, B62D 7/15, B62D 13/04, B60B 35/00

(54) **Elektrisches Hydraulikaggregat zur Lenkung von Vor- und Nachlaufachsen**
Electric hydraulic unit for steering leading or trailing axles
Module hydro-électrique pour la direction d'essieux avant et arrière

(30) Priorität: 14.02.2013 DE 102013002565
(43) Veröffentlichungstag der Anmeldung: 20.08.2014
(73) Patentinhaber: MAN Truck & Bus SE, 80995 München (DE)
(72) Erfinder: Schneider, Bernhard, 85250 Wollomoos (DE)
(74) Vertreter: Kotitschke, Bernd

(56) Entgegenhaltungen:
- EP-A1- 0 484 668
- EP-A1- 1 215 104
- EP-A2- 0 747 281
- EP-A2- 2 336 003
- EP-A2- 2 463 179
- DE-A1- 2 902 927
- DE-U1- 29 608 229
- US-A- 5 570 754

## Beschreibung

Die Erfindung betrifft eine Achsenanordnung für ein Fahrzeug, vorzugsweise ein Nutzfahrzeug und/oder einen Nutzfahrzeug-Anhänger, mit zumindest einer ersten lenkbaren Achse und zumindest einer zweiten lenkbaren Achse, wobei die zumindest eine zweite Achse vorzugsweise eine Nachlauf- und/oder eine Vorlaufachse umfasst.

EP 1 215 104 A1 offenbart den Oberbegriff des unabhängigen Anspruchs und zeigt ein Verfahren zur Einflussnahme auf die Lenkung und/oder den bedarfsweisen Antrieb einer Vor- oder Nachlaufachse in einem Nutzfahrzeug, wobei die die Lenkung der Räder der VLA/NLA bewirkenden Organe mechanisch nicht mit den Lenkungsorganen der Vorderachse des Nutzfahrzeugs gekoppelt und Teil einer eigenständigen Lenkungsanlage sind, wobei der Antrieb der VLA/NLA bei unterhalb einer festgelegten Fahrgeschwindigkeit erkannten Störungen in der Lenkungsanlage oder bei Überschreiten einer festgelegten Fahrgeschwindigkeit oder bedarfsabhängig, sobald der Schlupf an einer anderen angetriebenen Fahrzeugachse unter einen vorbestimmten Schwellenwert abfällt, abgeschaltet, wahlweise auch die Lenkungsanlage der VLA/NLA abgeschaltet wird. DE 296 08 229 U1 offenbart eine Anlenkung und Lenkung einer angetriebenen oder nicht angetriebenen starren Hinterachse eines Nutzfahrzeuges, insbesondere Vor- oder Nachlaufachse eines Schwerlastkraftwagens.

Nutzfahrzeuge, wie etwa Lastkraftwagen und Omnibusse, mit lenkbaren Vor- und Nachlaufachsen sind aus dem Stand der Technik in den unterschiedlichsten Ausführungsformen bekannt. Die Lenkung der Vor- und Nachlaufachsen wird mittels eines Geberzylinders realisiert, während eine am Antriebsmotor oder am Antriebsstrang des Nutzfahrzeugs montierte Pumpeneinrichtung für die Ölversorgung über ein Obitrol zum Geberzylinders vorgesehen ist und während der Fahrt des Nutzfahrzeugs ständig das Lenk-Öl im Kreis pumpt, um den Lenkkreislauf aufrecht zu erhalten. So wird z. B. bei einer Geradeausfahrt, etwa auf Autobahnen, keine Lenkung der Vor- und Nachlaufachsen benötigt. Trotzdem wird üblicherweise Energie aufgebracht, um den Lenkkreislauf aufrecht zu erhalten. Dadurch entsteht ein Energieverlust, z.B. durch Strömungsverluste, Reibung und Wärme.

Eine Aufgabe der Erfindung ist es, eine verbesserte, insbesondere energieoptimierte Lenkkonfiguration für eine Achsenanordnung mit zumindest zwei lenkbaren Achsen zu schaffen.

Diese Aufgabe wird mit den Merkmalen des unabhängigen Anspruchs gelöst. Vorteilhafte Weiterbildungen sind den Unteransprüchen zu entnehmen.

Die Erfindung schafft eine Achsenanordnung für ein Fahrzeug, z. B. ein Nutzfahrzeug und/oder einen Nutzfahrzeug-Anhänger. Das Nutzfahrzeug ist insbesondere ein Lastkraftwagen (z. B. eine Sattelzugmaschine) und/oder ein Omnibus. Das Fahrzeug kann ferner z. B. ein landwirtschaftliches Kraftfahrzeug und/oder ein landwirtschaftlicher Anhänger sein.

Die Achsenanordnung umfasst zumindest eine lenkbare erste Achse und zumindest eine lenkbare zweite Achse und zeichnet sich insbesondere dadurch aus, dass sie ein elektrisches, zweckmäßig über ein elektronisches Steuergerät angesteuertes Hydraulikaggregat zur Lenkung der zweiten Achse umfasst.

Es ist möglich, dass in Abhängigkeit eines Lenkwinkelabgleichs zwischen einem Lenkwinkel für die erste Achse und einem Lenkwinkel für die zweite Achse die Betriebsleistung des Hydraulikaggregats verändert wird, insbesondere die Betriebsleistung des Hydraulikaggregats zumindest reduziert oder das Hydraulikaggregat abgeschaltet wird und die zweite Achse vorzugsweise als Starrachse in Lenk-Nullstellung wirkt. Die erste Achse und die zweite Achse bilden zweckmäßig eine Master-Slave-Konfiguration mit der ersten Achse als Master und der zweiten Achse als Slave.

Das elektrische Hydraulikaggregat und zweckmäßig der z. B. in dem Steuergerät durchgeführte Lenkwinkelabgleich ermöglicht insbesondere eine energiesparende Lenkung für die zweite Achse. Das erfindungsgemäße Hydraulikaggregat muss nicht mehr wie üblich auch bei Geradeausfahrt oder bei nur kleinen Lenkmanövern dauerhaft laufen und Lenkfluid (z. B. Öl) im Kreis pumpen, sondern kann lenkmanöver- oder fahrtrichtungsabhängig und somit zweckmäßig energiesparend betrieben werden.

Der Lenkwinkelabgleich erfolgt vorzugsweise über der Zeit. Die Veränderung der Betriebsleistung des Hydraulikaggregats erfolgt insbesondere zusätzlich z. B. in Abhängigkeit zumindest einer erfassten Fahrzeuggeschwindigkeit und/oder zumindest einer erfassten Lenkgeschwindigkeit.

Es ist möglich, dass in Abhängigkeit eines Vergleichs zwischen i) einer Differenz zwischen dem Lenkwinkel für die erste Achse und dem Lenkwinkel für die zweite Achse und ii) einer vordefinierten Winkeldifferenz die Betriebsleistung des Hydraulikaggregats reduziert oder das Hydraulikaggregat abgeschaltet wird, z. B. wenn eine Differenz zwischen dem Lenkwinkel für die erste Achse und dem Lenkwinkel für die zweite Achse innerhalb einer vordefinierten Winkeldifferenz bleibt. Dadurch kann, zweckmäßig in Ergänzung zu der Energieersparnis, z. B. ermöglicht werden, dass das Hydraulikaggregat bei kleinen Differenzen (z. B. bei nicht absoluter Geradeausfahrt) nicht ständig ein- und ausgeschaltet wird. Die Betriebsleistung des Hydraulikaggregats kann ferner reduziert oder das Hydraulikaggregat kann ganz abgeschaltet werden, wenn eine geradlinige oder zumindest quasilineare Fahrt des Fahrzeugs vorliegt.

Es ist möglich, dass die Betriebsleistung des Hydraulikaggregats zwar reduziert oder das Hydraulikaggregat abgeschaltet wird, allerdings das Hydraulikaggregat, insbesondere dessen Pumpeneinrichtung, noch eine vordefinierte Zeitspanne nachläuft.

Die erste Achse ist zweckmäßig eine vordere Lenkachse zur Lenkung des Nutzfahrzeugs und dient somit zur Fahrtrichtungsveränderung. Allerdings kann auch eine hintere Achse zweckmäßig als Lenkachse ausgeführt sein und zur Fahrtrichtungsveränderung dienen, z. B. bei einem Stapler, einem Mähdrescher, einer Spezialmaschine, etc.. Aus Letztgenanntem ergibt sich, dass auch eine hintere Achse als erste Achse oder Master ausgeführt sein kann.

Die zweite Achse kann z. B. als Vorlauf- oder Nachlaufachse ausgeführt sein. Es ist ferner möglich, dass die Achsenanordnung mehrere zweite Achsen umfasst, wovon eine als Nachlaufachse und eine als Vorlaufachse ausgeführt ist.

Die Achsanordnung kann somit mehrere lenkbare zweite Achsen umfassen. Die mehreren zweiten Achsen sind zweckmäßig einzeln ansteuerbar, insbesondere um Kurvenradien abbilden zu können und/oder um ein Ausscheren zu ermöglichen und/oder enge Kurvenradien zu durchfahren.

Die zweite Achse ist zweckmäßig hinter der ersten Achse angeordnet und kann z. B. Teil eines Mehrachsenaggregats (z. B. ein Doppel- oder Dreiachsaggregat) sein, das vorzugsweise mindestens eine Starrachse umfasst.

Es ist möglich, dass das Hydraulikaggregat vorzugsweise direkt an der zweiten Achse montiert ist oder zumindest benachbart zu der zweiten Achse angeordnet ist, was z. B. mit einem Montagevorteil am Band verbunden ist, weil das Hydraulikaggregat an der zweiten Achse vormontiert werden kann und nur elektrisch anzusteuern ist. Das Hydraulikaggregat, insbesondere dessen Pumpeneinrichtung, ist somit vom Antriebsmotor oder allgemein vom Antriebsstrang des Fahrzeugs entfernt und hin zu der zweiten Achse verlagert. Elektrische Leitungen für die Lenkansteuerung des Hydraulikaggregats können flexibel verlegt werden und zugleich können Schwingungen durch ein Einfedern der zweiten Achse besser absorbiert werden. Zudem entfallen rahmenseitig die Rohrleitungen für die Lenkansteuerung von der Pumpeneinrichtung, wodurch rahmenseitig Bauraum frei wird. Ferner kann das Hydraulikaggregat an einer Drehmomentstütze des Fahrzeugs montiert werden.

Die zweite Achse ist vorzugsweise liftbar ausgeführt und kann z. B. mittels des Hydraulikaggregats für den angehobenen Zustand in Lenk-Nullstellung gebracht werden. Da die zweite Achse im angehobenen Zustand nicht gelenkt werden muss, kann die Betriebsleistung des Hydraulikaggregats reduziert oder das Hydraulikaggregat ausgeschaltet werden.

Es ist möglich, dass die zweite Achse mit Stoßdämpfern versehen ist und in die Stoßdämpfer Mikroschalter verbaut sind, um den angehobenen Zustand der zweiten Achse zu erfassen. Ein Vorteil des Verbaus eines Mikroschalters in die Stoßdämpfer ist, dass ein vollständig angehobener Zustand der zweiten Achse links und rechts erfasst werden kann.

Das Hydraulikaggregat ist vorzugsweise als separates und eigenständiges Hydraulikaggregat zur Lenkung der zweiten Achse ausgeführt. Das Hydraulikaggregat kann ebenso zweckmäßig als separates und eigenständiges Hydraulikaggregat ausgeführt sein, das nicht nur zur Lenkung einer einzigen zweiten Achse ausgeführt ist, sondern zur Lenkung mehrerer zweiter Achsen.

Das Hydraulikaggregat umfasst zweckmäßig eine elektromechanische Steuereinheit, über die die zweite Achse ansteuerbar ist, einen Elektromotor und eine Pumpeneinrichtung. Die elektromechanische Steuereinheit kann z. B. als Ventil, Magnetventil, Getriebe, Hydraulikeinheit, etc. ausgeführt sein.

Es ist möglich, dass in dem Steuergerät für die zweite Achse vorzugsweise flashbare Datensätze hinterlegt sind, die in den Lenkwinkelabgleich und/oder die Hydraulikaggregatsansteuerung einfließen und zumindest einen von folgenden vordefinierten Parametern beschreiben: einen oder mehrere Radstände der ersten Achse und/oder der zweiten Achse, die Breite des Fahrzeugs und/oder des Fahrzeug-Anhängers, ein oder mehrere Lenkgeschwindigkeiten, ein oder mehrere Kurvenradien, eine oder mehrere Fahrzeuggeschwindigkeiten, die Achszahl des Fahrzeugs und/oder des Fahrzeug-Anhängers, der oder die Achsabstände und eine oder mehrere der oben erwähnten Differenzen zwischen dem Lenkwinkel für die erste Achse und dem Lenkwinkel für die zweite Achse.

Der Lenkwinkel für die erste Achse kann z. B. an einer Lenksäule des Fahrzeugs oder quasi direkt an der ersten Achse erfasst werden, z. B. mittels Lenkwinkel- oder Inkrementalsensoren.

Es ist möglich, dass die erste Achse und eine zweite Achse an einem Zugfahrzeug (z. B. eine Sattelzugmaschine) angeordnet sind. Ergänzend ist es möglich, dass eine oder mehrere zweite Achsen an einem Fahrzeug-Anhänger angeordnet sind und vorzugsweise das Zugfahrzeug und der Fahrzeug-Anhänger einen Sattelzug bilden.

Es ist möglich, dass zumindest zwei zweite Achsen (z. B. zumindest drei, vier, fünf oder sogar mehr als sechs zweite Achsen) z. B. an einem Fahrzeug-Anhänger ausgebildet sind und die zwei zweiten Achsen einzeln über eine Fernbedingung z. B. mit Bedienpult und Displayanzeige ansteuerbar sind, während die Lenkung basierend auf dem Lenkwinkelabgleich deaktiviert ist. In Abhängigkeit einer Fahrzeuggeschwindigkeit kann die Lenkung basierend auf der Fernbedienung deaktiviert werden und die Lenkung basierend auf dem Lenkwinkelabgleich aktiviert werden. Letztgenannte Ausführungsform findet insbesondere Anwendung bei sogenannten Schwerlastaufliegern.

Erfindungsgemäß dient der Achskörper der zweiten Achse als Fluidbehälter (z. B. Ölbehälter) für das Hydraulikaggregat. Alternativ oder ergänzend ist ein Befestigungselement als Hohlkörper ausgeführt und dient zur Halterung einer Funktionskomponente (z. B. eine Drehmomentstütze, eine Stoßdämpferbefestigung, ein Ventilanbau, eine Stabilisatorbefestigung, eine Luftführung, eine Rohrleitung, eine Unter- oder Querlenkereinrichtung, etc.) an der zweiten Achse.

Die Funktionskomponente steht mit dem Befestigungselement zweckmäßig so in Verbindung, dass sie als Kühlrippe wirkt, um Wärmeenergie des im Befestigungselement befindlichen Fluids (z. B. Öl) abführen zu können.

Es ist möglich, dass die zweite Achse mittels des Hydraulikaggregats in Lenk-Nullstellung gebracht wird und als Starrachse wirkt, wenn das Hydraulikaggregat und/oder dessen Steuergerät ausfällt oder eine Fehlfunktion aufweist.

Die Erfindung umfasst ferner ein Lenkverfahren für eine Achsenanordnung eines Fahrzeugs, vorzugsweise eines Nutzfahrzeugs und/oder eines Nutzfahrzeug-Anhängers, insbesondere einer Achsenanordnung wie hierin beschrieben. Die Achsenanordnung umfasst somit zumindest eine lenkbare erste Achse und zumindest eine lenkbare zweiten Achse und das Lenkverfahren zeichnet sich insbesondere dadurch aus, dass ein elektrisches Hydraulikaggregat die zweite Achse lenkt. Weitere Merkmale des Lenkverfahrens ergeben sich aus der Funktions- und Strukturbeschreibung der erfindungsgemäßen Achsenanordnung.

Die Erfindung umfasst zudem ein Fahrzeug, insbesondere ein Nutzfahrzeug und/oder einen Nutzfahrzeug-Anhänger, mit einer Achsenanordnung wie hierin beschrieben.

Das Nutzfahrzeug ist vorzugsweise ein Lastkraftwagen (z. B. ein Sattelschlepper) oder ein Omnibus.

Zu erwähnen ist, dass im Rahmen der Erfindung das Merkmal "Anhänger" zweckmäßig auch sogenannte Auflieger oder Sattelauflieger umfasst. Ebenso sind z. B. Anhänger mit Drehschemellenkung oder Deichsel umfasst.

Zu erwähnen ist ferner, dass das Steuergerät im Rahmen der Erfindung z. B. auch ein Regelungsgerät umfasst.

Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt einen schematischen Funktionsplan einer Achsenanordnung gemäß einer Ausführungsform der Erfindung,
- Fig. 2: zeigt eine schematische Ansicht einer zweiten Achse aus Fig. 1,
- Fig. 3: zeigt eine schematische Ansicht eines elektrischen Hydraulikaggregats aus den Figuren 1 und 2,
- Fig. 4: zeigt eine schematische Ansicht eines Fahrzeugs gemäß einer Ausführungsform der Erfindung und
- Fig. 5: zeigt eine schematische Ansicht eines Fahrzeugs gemäß einer anderen Ausführungsform der Erfindung.

Die unter Bezugnahme auf die Figuren beschrieben Ausführungsformen der Erfindung stimmen teilweise überein, wobei ähnliche oder identische Teile mit den gleichen Bezugszeichen versehen sind, und zu deren Erläuterung auch auf die Beschreibung anderer Ausführungsformen oder Figuren verwiesen wird, um Wiederholungen zu vermeiden.

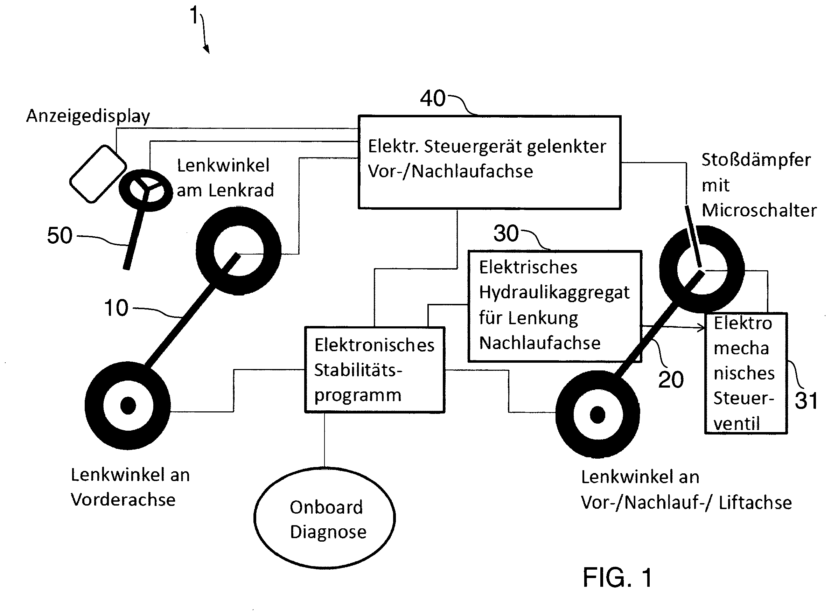

Figur 1 zeigt eine schematische Ansicht einer Achsenanordnung 1 für ein Fahrzeug, vorzugsweise ein Nutzfahrzeug, insbesondere einen Lastkraftwagen oder einen Omnibus..

Die Achsenanordnung 1 weist eine erste Achse 10 auf, die eine vordere Lenkachse zur Lenkung des Fahrzeugs und somit zur Fahrtrichtungsveränderung darstellt. Die Achsanordnung 1 weist ferner eine hinter der ersten Achse 10 angeordnete zweite Achse 20 auf, die in Abhängigkeit des von der ersten Achse 10 definierten Lenkmanövers lenkbar ist. Die zweite Achse 20 ist Teil eines eine Starrachse umfassenden Mehrachsenaggregats. Die zweite Achse 20 kann als Vorlauf- oder Nachlaufachse ausgeführt sein. Die Starrachse ist in Figur 1 nicht dargestellt.

Die zweite Achse 20 ist liftbar ausgeführt und mit Stoßdämpfern versehen. In die Stoßdämpfer sind Mikroschalter verbaut, um den angehobenen Zustand der zweiten Achse 20 zu erfassen.

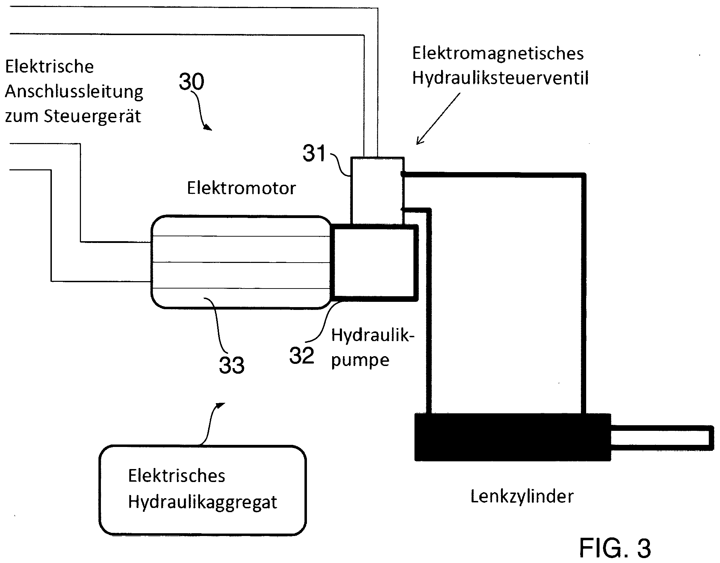

Die Achsenanordnung 1 weist ein elektrisches Hydraulikaggregat 30 zur Lenkung der zweiten Achse 20 auf. Das elektrische Hydraulikaggregat 30 umfasst ein elektromechanisches Steuerventil 31 (z. B. ein elektromagnetisches Hydrauliksteuerventil) und, wie in Figur 3 zu sehen, zudem eine Hydraulikpumpe 32 und einen Elektromotor 33.

Die Achsenanordnung 1 ist mit einem elektrischen Steuer- und/oder Regelgerät 40 für die zweite Achse 20 ausgestattet. Das Steuergerät 40 steht in Wirkverbindung mit den Mikroschaltern, einem Kombi-Bedienelement mit Anzeigedisplay für einen Fahrer des Fahrzeugs, einem Lenkwinkelsensor an der Lenksäule 50 des Fahrzeugs, alternativ oder ergänzend mit einem Lenkwinkelsensor an der ersten Achse 10, und einem elektronischen Stabilitätsprogramm (ESP) oder allgemein einer Fahrdynamikregelung. Das elektronische Stabilitätsprogramm (ESP) wiederum steht in Wirkverbindung mit dem elektrischen Hydraulikaggregat 30 und wie üblich mit Fahrzeugbremsen und einem On-Board-Diagnosesystem. Das elektrische Hydraulikaggregat 30 steht über sein elektromechanisches Steuerventil 31 in Wirkverbindung mit einem Lenkzylinder zum Lenken der zweiten Achse 20.

Im Steuergerät 40 werden z. B. mittels Winkel- und/oder Inkrementalsensoren erfasste Lenkwinkel der ersten Achse 10 und der zweiten Achse 20 verarbeitet und ein Lenkwinkelabgleich durchgeführt. In Abhängigkeit des Lenkwinkelabgleichs, insbesondere wenn eine Differenz zwischen den Lenkwinkeln innerhalb einer vordefinierten Differenz liegt oder der Lenkwinkelabgleich auf eine Geradeausfahrt des Fahrzeugs schließen lässt, wird die Betriebsleistung des Hydraulikaggregats 30 reduziert oder das Hydraulikaggregat 30 abgeschaltet. Die Hydraulikpumpe 32 läuft noch eine vordefinierte Zeitspanne nach und die zweite Achse 20 wird in Lenk-Nullstellung als Starrachse betrieben. Zwischen der ersten Achse 10 und der zweiten Achsen 20 existiert somit eine Master-Slave-Abhängigkeit mit der ersten Achse 10 als Master und der zweiten Achse 20 als Slave. Dadurch kann insbesondere ein Warmlaufen oder allgemein ein Energieverlust vermieden werden, der entstehen würde, wenn das Hydraulikaggregat 30 auch bei nur sehr kleinen oder gar keinen Lenkmanövern ständig betrieben werden würde.

Das Lenkverfahren für die zweite Achse 20 erfolgt im Wesentlichen wie folgt: Ein an der Lenksäule 50 oder an der ersten Achse 10 erfasster Lenkwinkel wird dem Steuergerät 40 zugeführt. Das Steuergerät 40 verarbeitet den Lenkwinkel und gibt ihn über eine elektrische Leitung an das Hydraulikaggregat 30 weiter. Des Weiteren wird das elektromechanische Steuerventil 31 angesteuert, um den Lenkwinkel für die zweite Achse 20 zu übertragen. Der Lenkwinkel der ersten Achse 10 und der Lenkwinkel der zweiten Achse 20 werden nun durch eine Regelung abgeglichen. Im Steuergerät 40 sind vordefinierte, insbesondere festgeschriebene Differenzen der Lenkwinkel und/oder vordefinierte, insbesondere festgeschriebene Differenzen der Lenkwinkel über der Zeit hinterlegt, z. B. in Kombination mit zugehörigen Lenk- und Fahrzeuggeschwindigkeiten. Wenn der Lenkwinkelabgleich zu einer Differenz führt, die die vordefinierte Differenz nicht überschreitet, bleibt das Hydraulikaggregat 30 deaktiviert, so dass bei kleinen Lenkwinkeln ein Einschalten des Hydraulikaggregats 30 vermieden wird (z. B. während einer Geradeausfahrt auf einer Autobahn). In der Schaltlogik des Steuergeräts 40 ist zudem eine vordefinierte Nachlaufzeit für das Hydraulikaggregat 30, insbesondere der Hydraulikpumpe 32 hinterlegt. Wenn der Lenkwinkelabgleich zu einer Differenz führt, die die vordefinierte Differenz überschreitet, nimmt das Hydraulikaggregat 30 seinen Betrieb wieder auf.

In dem Steuergerät 40 können weitere, vorzugsweise flashbare Datensätze hinterlegt sein, die zweckmäßig in den Lenkwinkelabgleich und/oder die Hydraulikaggregatsansteuerung einfließen können. Die Datensätze können z. B. Radstände, Fahrzeugbreiten, Lenkgeschwindigkeiten, Fahrzeuggeschwindigkeiten, Kurvenradien, Achszahlen, Achsabstände, Nachlaufzeiten für das Hydraulikaggregat 30, die zuvor erwähnten vordefinierten Differenzen zwischen dem Lenkwinkel der ersten Achse 10 und dem Lenkwinkel der zweiten Achse 20, etc. umfassen.

Das Steuergerät 40 ist ferner so ausgeführt, dass bei einem Ausfall oder einer Fehlfunktion des Hydraulikaggregats 30 eine entsprechende Botschaft versandt wird, die als Check-Control-Meldung über ein Kombi-Bedienelement mit Anzeigedisplay dem Fahrer angezeigt wird. Zugleich verarbeitet das Stabilitätsprogramm die Botschaft und steuert die linke und/oder die rechte Bremse der zweiten Achse 20 an, um ein Moment zu erzeugen, das der Lenkung entgegenwirkt, um ein Ausbrechen zu verhindern. Dazu dient eine im Stabilitätsprogramm integrierte Lenkbremse. Ebenso kann bei Ausfall oder Fehlfunktion des Steuergeräts 40 und/oder einer unplausiblen Botschaft die zweite Achse 20 selbstständig in Lenk-Nullstellung gefahren werden und mittels dem Stabilitätssystem abgefangen und implementiert werden. Der Lenkmechanismus für die zweite Achse 20 ist dann gesperrt, weshalb die zweite Achse 20 als Starrachse wirkt.

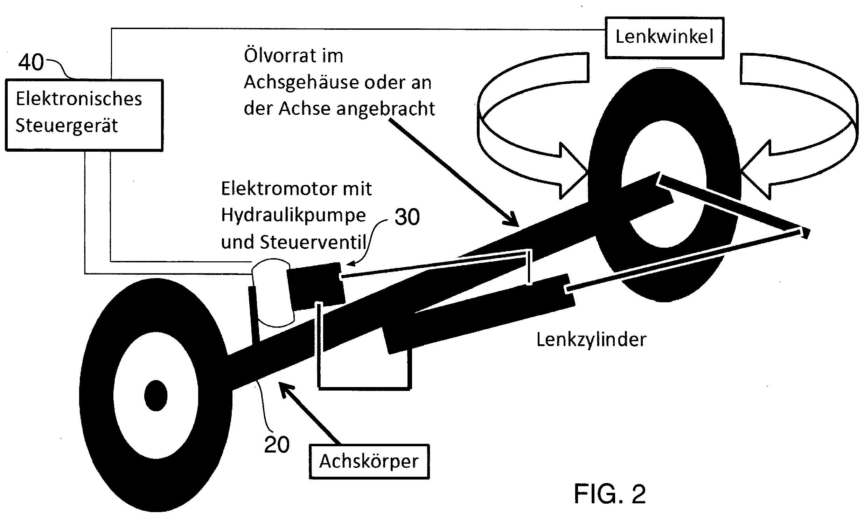

Figur 2 zeigt einen Teil der in Figur 1 gezeigten Achsenanordnung 1. Figur 2 zeigt die zweite Achse 20 und, dass das Hydraulikaggregat 30 direkt an dem Achskörper der zweiten Achse 20 montiert ist oder zumindest benachbart dazu angeordnet ist. Der Achskörper der zweiten Achse 20 ist als Fluidbehälter (Ölbehälter) für das Hydraulikaggregat 30 ausgeführt. Alternativ oder ergänzend können ein oder mehrere nicht gezeigte Befestigungselemente als Hohlkörper ausgeführt sein und als Fluidbehälter für das Hydraulikaggregat 30 dienen. Die Befestigungselemente sind vorzugsweise am Achskörper der zweiten Achse 20 montiert und dienen zur Halterung von Funktionskomponenten, wie etwa einer Drehmomentstütze, eines Stoßdämpfers, eines Stabilisators, eines Unterlenkers, eines Querlenkers, Luftführungen, Rohrleitungen, etc.. Die Funktionskomponenten (z. B. deren Haltelaschen) sind mit den Befestigungselementen so verbunden, dass sie als Kühlrippen für das im Befestigungselement aufgenommene Fluid wirken.

Figur 3 zeigt insbesondere den Aufbau des Hydraulikaggregats 30, das durch das Steuerventil 31, die Hydraulikpumpe 32 und den Elektromotor 33 gebildet wird. Das Steuerventil 31 und der Elektromotor 33 stehen mit dem Steuergerät 40 in Wirkverbindung, während das Steuerventil 31 zusätzlich mit dem Lenkzylinder für die zweite Achse 20 wirkverbunden ist.

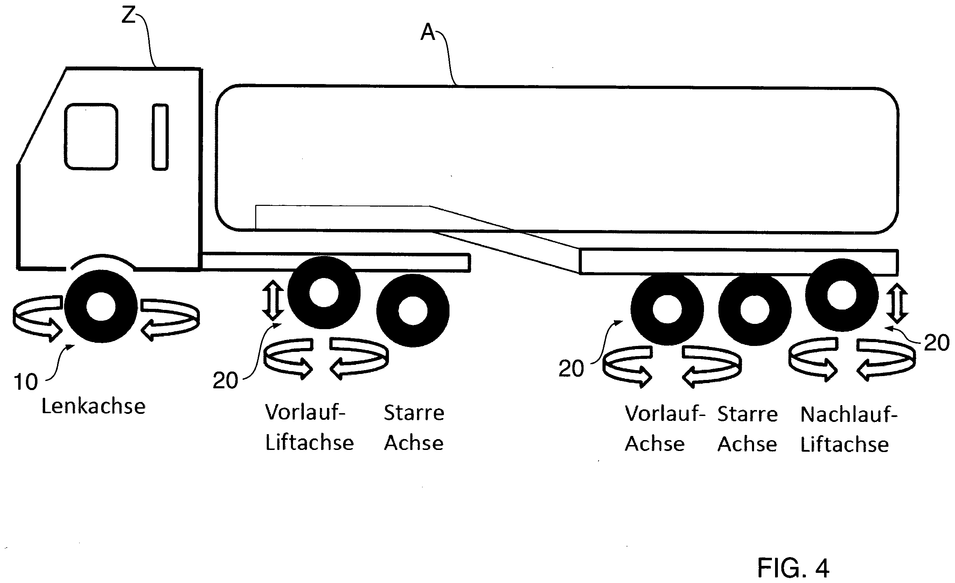

Figur 4 zeigt eine schematische Ansicht eines Fahrzeugs gemäß einer Ausführungsform der Erfindung. Das Fahrzeug umfasst ein Zugfahrzeug Z und einen Anhänger A. Das Zugfahrzeug Z ist als Sattelzugmaschine ausgeführt, während der Anhänger A als Sattelaufleger ausgeführt ist.

Das Zugfahrzeug Z umfasst eine erste Achse 10 und ein hinteres Doppelachsaggregat, das eine als liftbare Vorlaufachse ausgeführte zweite Achse 20 und eine Starrachse aufweist. Der Anhänger A weist ein Dreiachsaggregat auf, das eine mittlere Starrachse und zwei zweite Achsen 20, nämlich eine Vorlaufachse und eine liftbare Nachlaufachse, umfasst.

Den in Figur 4 gezeigten zweiten Achsen 20 ist jeweils ein eigenständiges elektrisches Hydraulikaggregat 30 zugeordnet. Allerdings ist zu erwähnen, dass im Rahmen der Erfindung auch Ausführungsformen umfasst sind, in denen ein elektrisches Hydraulikaggregat 30 zwei zweiten Achsen 20 zugeordnet ist, um die zwei zweiten Achsen 20 zu lenken.

Die Betriebsleistungen der drei Hydraulikaggregate 30 werden in Abhängigkeit eines Lenkwinkelabgleichs zwischen einem Lenkwinkel für die erste Achse 10 und einem jeweiligen Lenkwinkel für die drei zweiten Achsen 20 zumindest reduziert oder vorzugsweise gänzlich auf Null heruntergefahren.

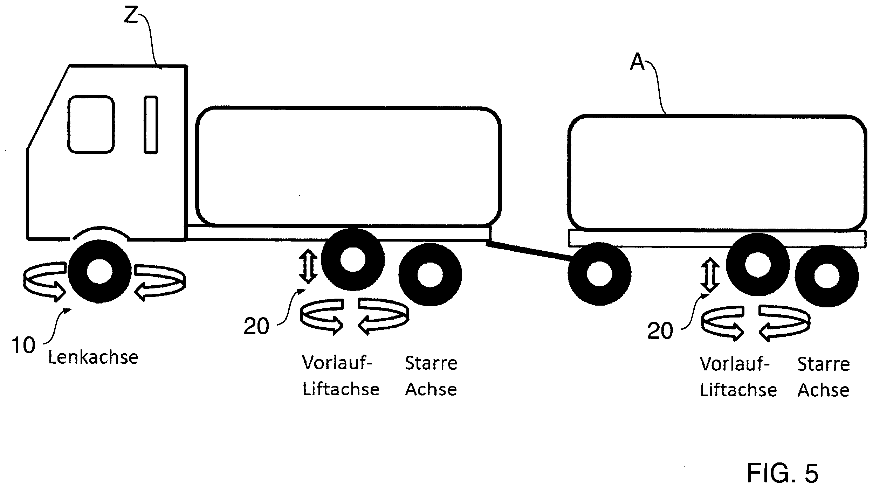

Figur 5 zeigt eine schematische Ansicht eines Fahrzeugs gemäß einer anderen Ausführungsform der Erfindung. Das Fahrzeug umfasst ein Zugfahrzeug Z und einen Anhänger A mit Drehschemel-Lenkung.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Achsenanordnung (1) für ein Fahrzeug, vorzugsweise ein Nutzfahrzeug und/oder einen Nutzfahrzeug-Anhänger, mit:
- zumindest einer lenkbaren ersten Achse (10) und
- zumindest einer lenkbaren zweiten Achse (20),
wobei
- ein elektrisches Hydraulikaggregat (30) zur Lenkung der zweiten Achse (20) vorgesehen ist,
**dadurch gekennzeichnet, dass**
der Achskörper der zweiten Achse (20) als Fluidbehälter für das Hydraulikaggregat (30) dient und/oder ein Befestigungselement als Hohlkörper ausgeführt ist, zur Halterung einer Funktionskomponente an der zweiten Achse (20) dient und als Fluidbehälter für das Hydraulikaggregat (30) dient.

2. Achsenanordnung (1) nach Anspruch 1, **dadurch gekennzeichnet, dass** in Abhängigkeit eines Lenkwinkelabgleichs zwischen einem Lenkwinkel für die erste Achse (10) und einem Lenkwinkel für die zweite Achse (20) die Betriebsleistung des Hydraulikaggregats (30) verändert wird und vorzugsweise der Lenkwinkelabgleich über der Zeit erfolgt.

3. Achsenanordnung (1) nach Anspruch 2, **dadurch gekennzeichnet, dass** in den Lenkwinkelabgleich zumindest eine Fahrzeuggeschwindigkeit und/oder zumindest eine Lenkgeschwindigkeit einfließt.

4. Achsenanordnung (1) nach Anspruch 2 oder 3, **dadurch gekennzeichnet, dass** die Betriebsleistung des Hydraulikaggregats (30) reduziert oder das Hydraulikaggregat (30) abgeschaltet wird und vorzugsweise die zweite Achse (20) als Starrachse wirkt, insbesondere in Lenk-Nullstellung.

5. Achsenanordnung (1) nach einem der Ansprüche 2 bis 4, **dadurch gekennzeichnet, dass** in Abhängigkeit eines Vergleichs einer Differenz zwischen dem Lenkwinkel für die erste Achse (10) und dem Lenkwinkel für die zweite Achse (20) und einer vordefinierten Winkeldifferenz die Betriebsleistung des Hydraulikaggregats (30) reduziert oder das Hydraulikaggregat (30) abgeschaltet wird.

6. Achsenanordnung (1) nach einem der vorhergehenden Ansprüche, **dadurch gekennzeichnet, dass** die Betriebsleistung des Hydraulikaggregats (30) reduziert oder das Hydraulikaggregat (30) abgeschaltet wird, wenn sich das Fahrzeug geradeaus oder zumindest quasilinear fortbewegt.

7. Achsenanordnung (1) nach einem der vorhergehenden Ansprüche, **dadurch gekennzeichnet, dass** die erste Achse (10) eine Lenkachse zur Lenkung des Fahrzeugs ist und somit zur Fahrtrichtungsveränderung dient und die zumindest eine zweite Achse (20) eine Vorlaufachse und/oder eine Nachlaufachse ist.

8. Achsenanordnung (1) nach einem der vorhergehenden Ansprüche, **dadurch gekennzeichnet, dass** die zweite Achse (20) hinter der ersten Achse (10) angeordnet ist und Teil eines Mehrachsenaggregats ist.

9. Achsenanordnung (1) nach einem der vorhergehenden Ansprüche, **dadurch gekennzeichnet, dass**
- das Hydraulikaggregat (30) direkt an der zweiten Achse (20) montiert ist oder zumindest benachbart zu der zweiten Achse (20) angeordnet ist,
oder
- das Hydraulikaggregat (30) an einer Drehmomentstütze des Fahrzeugs montiert ist.

10. Achsenanordnung (1) nach einem der vorhergehenden Ansprüche, **dadurch gekennzeichnet, dass** die zweite Achse (20) liftbar ausgeführt ist.

11. Achsenanordnung (1) nach Anspruch 10, **dadurch gekennzeichnet, dass** die Betriebsleistung des Hydraulikaggregats (30) reduziert wird oder das Hydraulikaggregat (30) abgeschaltet wird, wenn die zweite Achse (20) angehoben ist.

12. Achsenanordnung (1) nach Anspruch 10 oder 11, **dadurch gekennzeichnet, dass** in Stoßdämpfern Microschalter zum Erfassen eines angehobenen Zustands der zweiten Achse (20) verbaut sind.

13. Achsenanordnung (1) nach einem der vorhergehenden Ansprüche, **dadurch gekennzeichnet, dass** das Hydraulikaggregat (30) als eigenständiges Hydraulikaggregat zur Lenkung zumindest einer zweiten Achse (20) ausgeführt ist.

14. Achsenanordnung (1) nach einem der vorhergehenden Ansprüche, **dadurch gekennzeichnet, dass** das Hydraulikaggregat (30) eine elektromechanische Steuereinheit (31), über die die zweite Achse (20) ansteuerbar ist, einen Elektromotor (32) und eine Pumpeneinrichtung (33) umfasst.

15. Achsenanordnung (1) nach einem der vorhergehenden Ansprüche, **dadurch gekennzeichnet, dass** in einem Steuergerät (40) flashbare Datensätze hinterlegt sind, die in den Lenkwinkelabgleich und/oder die Hydraulikaggregatsansteuerung einfließen und zumindest eines von Folgenden beschreiben:
- einen oder mehrere Radstände oder Achsabstände,
- Breite des Fahrzeugs und/oder des Fahrzeug-Anhängers,
- eine oder mehrere Lenkgeschwindigkeiten,
- eine oder mehrere Kurvenradien,
- eine oder mehrere Achszahlen,
- eine oder mehrere Fahrzeuggeschwindigkeiten,
- eine oder mehrere vordefinierte Differenzen zwischen dem Lenkwinkel für die erste Achse (10) und dem Lenkwinkel für die zweite Achse (20),
- eine oder mehrere vordefinierte Nachlaufzeiten für das Hydraulikaggregat (30).

16. Achsenanordnung (1) nach einem der vorhergehenden Ansprüche, **dadurch gekennzeichnet, dass** der Lenkwinkel für die erste Achse (10) an einer Lenksäule (50) des Fahrzeugs oder an der ersten Achse (10) erfasst wird.

17. Achsenanordnung (1) nach einem der vorhergehenden Ansprüche, **dadurch gekennzeichnet, dass** die erste Achse (10) und eine zweite Achse (20) an einem Zugfahrzeug angeordnet sind und zumindest eine weitere zweite Achse (20) an einem Fahrzeug-Anhänger angeordnet ist.

18. Achsenanordnung (1) nach einem der vorhergehenden Ansprüche, **dadurch gekennzeichnet, dass** zumindest zwei zweite Achsen (20) vorzugsweise an einem Fahrzeug-Anhänger ausgebildet sind, die einzeln über eine Fernbedienung ansteuerbar sind, während die Lenkung basierend auf dem Lenkwinkelabgleich deaktiviert ist, und in Abhängigkeit einer Fahrzeuggeschwindigkeit die Lenkung basierend auf der Fernbedienung deaktiviert ist und die Lenkung basierend auf dem Lenkwinkelabgleich erfolgt.

19. Achsenanordnung (1) nach einem der vorhergehenden Ansprüche, **dadurch gekennzeichnet, dass** die Funktionskomponente mit dem Befestigungselement so verbunden ist, dass sie als Kühlrippe für das Fluid im Befestigungselement wirkt.

20. Achsenanordnung (1) nach einem der vorhergehenden Ansprüche, **dadurch gekennzeichnet, dass** die zweite Achse (20) in Lenk-Nullstellung gefahren wird und als Starrachse wirkt, wenn das Hydraulikaggregat (30) und/oder dessen Steuergerät (40) ausfällt oder eine Fehlfunktion aufweist

21. Lenkverfahren für eine Achsenanordnung (1) eines Fahrzeugs nach einem der vorhergehenden Ansprüche, vorzugsweise eines Nutzfahrzeugs und/oder eines Nutzfahrzeug-Anhängers, mit zumindest einer lenkbaren ersten Achse (10) und zumindest einer lenkbaren zweiten Achse (20), **dadurch gekennzeichnet, dass** ein elektrisches Hydraulikaggregat (30) die zweite Achse (20) lenkt.

22. Lenkverfahren nach Anspruch 21, **dadurch gekennzeichnet, dass** in Abhängigkeit eines Lenkwinkelabgleichs zwischen einem Lenkwinkel für die erste Achse (10) und einem Lenkwinkel für die zweite Achse (20) die Betriebsleistung des Hydraulikaggregats (30) verändert wird, vorzugsweise die Betriebsleistung reduziert oder das Hydraulikaggregat (30) abgeschaltet wird.

23. Fahrzeug, insbesondere Nutzfahrzeug und/oder Nutzfahrzeug-Anhänger, mit einer Achsenanordnung (1) nach einem der Ansprüche 1 bis 20.

## Claims

1. An axle arrangement (1) for a vehicle, preferably a commercial vehicle and/or a commercial vehicle trailer, having:
- at least one steerable first axle (10) and
- at least one steerable second axle (20),
wherein
- an electric hydraulic unit (30) for steering the second axle (20) is provided,
**characterized in that**
the axle body of the second axle (20) serves as a fluid container for the hydraulic unit (30) and/or a fastening element is configured as a hollow body, serves for holding a functional component on the second axle (20) and serves as a fluid container for the hydraulic unit (30) .

2. The axle arrangement (1) according to Claim 1, **characterized in that** the operating power of the hydraulic unit (30) is changed in dependence on a steering angle comparison between a steering angle for the first axle (10) and a steering angle for the second axle (20), and the steering angle comparison preferably occurs over time.

3. The axle arrangement (1) according to Claim 2, **characterized in that** at least one vehicle speed and/or at least one steering speed has an influence in the steering angle comparison.

4. The axle arrangement (1) according to Claim 2 or 3, **characterized in that** the operating power of the hydraulic unit (30) is reduced or the hydraulic unit (30) is switched off and preferably the second axle (20) acts as a rigid axle, in particular in the neutral steering position.

5. The axle arrangement (1) according to one of Claims 2 to 4, **characterized in that** the operating power of the hydraulic unit (30) is reduced or the hydraulic unit (30) is switched off in dependence on a comparison of a difference between the steering angle for the first axle (10) and the steering angle for the second axle (20) and a predefined angle difference.

6. The axle arrangement (1) according to one of the preceding claims, **characterized in that** the operating power of the hydraulic unit (30) is reduced or the hydraulic unit (30) is switched off if the vehicle moves on straight ahead or at least in a quasilinear manner.

7. The axle arrangement (1) according to one of the preceding claims, **characterized in that** the first axle (10) is a steering axle for steering the vehicle and thus serves for changing the direction of travel and the at least one second axle (20) is a leading axle and/or a trailing axle.

8. The axle arrangement (1) according to one of the preceding claims, **characterized in that** the second axle (20) is arranged behind the first axle (10) and is part of a multi-axle unit.

9. The axle arrangement (1) according to one of the preceding claims, **characterized in that**
- the hydraulic unit (30) is mounted directly on the second axle (20) or is arranged at least adjacent to the second axle (20),
or
- the hydraulic unit (30) is mounted on a torque support of the vehicle.

10. The axle arrangement (1) according to one of the preceding claims, **characterized in that** the second axle (20) is configured to be liftable.

11. The axle arrangement (1) according to Claim 10, **characterized in that** the operating power of the hydraulic unit (30) is reduced or the hydraulic unit (30) is switched off if the second axle (20) is raised.

12. The axle arrangement (1) according to Claim 10 or 11, **characterized in that** microswitches for detecting a raised state of the second axle (20) are installed in impact dampers.

13. The axle arrangement (1) according to one of the preceding claims, **characterized in that** the hydraulic unit (30) is configured as a stand-alone hydraulic unit for steering at least one second axle (20).

14. The axle arrangement (1) according to one of the preceding claims, **characterized in that** the hydraulic unit (30) comprises an electromechanical control unit (31) via which the second axle (20) can be controlled, an electric motor (32) and a pump device (33).

15. The axle arrangement (1) according to one of the preceding claims, **characterized in that** data sets which can be flashed in a control device (40) are stored which have an influence in the steering angle comparison and/or the hydraulic unit control and describe at least one of the following:
- one or more wheelbases or axle spacings,
- width of the vehicle and/or of the vehicle trailer,
- one or more steering speeds,
- one or more curve radii,
- one or more axle numbers,
- one or more vehicle speeds,
- one or more predefined differences between the steering angle for the first axle (10) and the steering angle for the second axle (20),
- one or more predefined overrun times for the hydraulic unit (30).

16. The axle arrangement (1) according to one of the preceding claims, **characterized in that** the steering angle for the first axle (10) is detected on a steering column (50) of the vehicle or on the first axle (10).

17. The axle arrangement (1) according to one of the preceding claims, **characterized in that** the first axle (10) and a second axle (20) are arranged on a tractor vehicle and at least one further second axle (20) is arranged on a vehicle trailer.

18. The axle arrangement (1) according to one of the preceding claims, **characterized in that** at least two second axles (20) are preferably formed on a vehicle trailer and can be individually controlled via a remote control while the steering based on the steering angle comparison is deactivated, and, in dependence on a vehicle speed, the steering based on the remote control is deactivated and the steering occurs based on the steering angle comparison.

19. The axle arrangement (1) according to one of the preceding claims, **characterized in that** the functional component is connected to the fastening element in such a way that it acts as a cooling rib for the fluid in the fastening element.

20. The axle arrangement (1) according to one of the preceding claims, **characterized in that** the second axle (20) is moved into the neutral steering position and acts as a rigid axle if the hydraulic unit (30) and/or its control unit (40) fail/fails or have/has a malfunction.

21. A steering method for an axle arrangement (1) of a vehicle according to one of the preceding claims, preferably of a commercial vehicle and/or of a commercial vehicle trailer, having at least one steerable first axle (10) and at least one steerable second axle (20), **characterized in that** an electric hydraulic unit (30) steers the second axle (20).

22. The steering method according to Claim 21, **characterized in that** the operating power of the hydraulic unit (30) is changed in dependence on a steering angle comparison between a steering angle for the first axle (10) and a steering angle for the second axle (20), with preferably the operating power being reduced or the hydraulic unit (30) being switched off.

23. A vehicle, in particular a commercial vehicle and/or a commercial vehicle trailer, having an axle arrangement (1) according to one of Claims 1 to 20.

## Revendications

1. Système d'essieux (1) pour un véhicule, de préférence pour un véhicule utilitaire et/ou une remorque de véhicule utilitaire, avec:
- au moins un premier essieu orientable (10) et
- au moins un deuxième essieu orientable (20),
dans lequel
- il est prévu un module hydro-électrique (30) pour l'orientation du deuxième essieu (20),
**caractérisé en ce que** le corps d'essieu du deuxième essieu (20) sert de réservoir de fluide pour le module hydraulique (30) et/ou un élément de fixation est formé par un corps creux, sert pour le support d'un composant fonctionnel sur le deuxième essieu (20) et sert de réservoir de fluide pour le module hydraulique (30).

2. Système d'essieux (1) selon la revendication 1, **caractérisé en ce que** l'on modifie la puissance de fonctionnement du module hydraulique (30) en fonction d'une compensation d'angle de braquage entre un angle de braquage pour le premier essieu (10) et un angle de braquage pour le deuxième essieu (20) et la compensation d'angle de braquage est de préférence effectuée au cours du temps.

3. Système d'essieux (1) selon la revendication 2, **caractérisé en ce qu'**au moins une vitesse du véhicule et/ou au moins une vitesse de braquage intervient dans la compensation d'angle de braquage.

4. Système d'essieux (1) selon une revendication 2 ou 3, **caractérisé en ce que** l'on réduit la puissance de fonctionnement du module hydraulique (30) ou on coupe le module hydraulique (30), et de préférence le second essieu (20) opère comme essieu rigide, en particulier en position de braquage nul.

5. Système d'essieux (1) selon l'une quelconque des revendications 2 à 4, **caractérisé en ce que** l'on réduit la puissance de fonctionnement du module hydraulique (30) ou on coupe le module hydraulique (30) en fonction d'une comparaison d'une différence entre l'angle de braquage pour le premier essieu (10) et l'angle de braquage pour le second essieu (20) et une différence d'angle prédéfinie.

6. Système d'essieux (1) selon l'une quelconque des revendications précédentes, **caractérisé en ce que** l'on réduit la puissance de fonctionnement du module hydraulique (30) ou on coupe le module hydraulique (30), lorsque le véhicule se déplace en ligne droite ou au moins de façon quasi linéaire.

7. Système d'essieux (1) selon l'une quelconque des revendications précédentes, **caractérisé en ce que** le premier essieu (10) est un essieu directeur pour la direction du véhicule et sert ainsi pour le changement de la direction de circulation et ledit au moins un second essieu (20) est un essieu avant et/ou un essieu arrière.

8. Système d'essieux (1) selon l'une quelconque des revendications précédentes, **caractérisé en ce que** le second essieu (20) est disposé derrière le premier essieu (10) et fait partie d'un ensemble de plusieurs essieux.

9. Système d'essieux (1) selon l'une quelconque des revendications précédentes, **caractérisé en ce que**
- le module hydraulique (30) est monté directement sur le second essieu (20) ou est disposé au moins à proximité du second essieu (20),
ou
- le module hydraulique (30) est monté sur un support de couple du véhicule.

10. Système d'essieux (1) selon l'une quelconque des revendications précédentes, **caractérisé en ce que** le second essieu (20) est réalisé sous forme soulevable.

11. Système d'essieux (1) selon la revendication 10, **caractérisé en ce que** l'on réduit la puissance de fonctionnement du module hydraulique (30) ou on coupe le module hydraulique (30), lorsque le second essieu (20) est soulevé.

12. Système d'essieux (1) selon une revendication 10 ou 11, **caractérisé en ce que** des micro-interrupteurs sont intégrés dans des amortisseurs pour détecter un état soulevé du second essieu (20).

13. Système d'essieux (1) selon l'une quelconque des revendications précédentes, **caractérisé en ce que** le module hydraulique (30) est formé par un module hydraulique autonome pour la direction d'au moins un second essieu (20).

14. Système d'essieux (1) selon l'une quelconque des revendications précédentes, **caractérisé en ce que** le module hydraulique (30) comprend une unité de commande électromécanique (31), par laquelle le second essieu (20) peut être commandé, un moteur électrique (32) et un dispositif de pompe (33).

15. Système d'essieux (1) selon l'une quelconque des revendications précédentes, **caractérisé en ce que** des ensembles de données flashables sont stockés dans un appareil de commande (40), et interviennent dans la comparaison d'angle de braquage et/ou la commande du module hydraulique et décrivent au moins un des cas suivants:
- une ou plusieurs position(s) des roues ou distance(s) des essieux,
- la largeur du véhicule et/ou de la remorque de véhicule,
- une ou plusieurs vitesse(s) de braquage,
- un ou plusieurs rayon(s) de courbure,
- un ou plusieurs nombre(s) d'essieux,
- une ou plusieurs vitesse(s) du véhicule,
- une ou plusieurs différence(s) prédéfinie(s) entre l'angle de braquage pour le premier essieu (10) et l'angle de braquage pour le second essieu (20),
- un ou plusieurs temps de retard prédéfini(s) pour le module hydraulique (30).

16. Système d'essieux (1) selon l'une quelconque des revendications précédentes, **caractérisé en ce que** l'angle de braquage pour le premier essieu (10) est détecté à une colonne de direction (50) du véhicule ou au premier essieu (10).

17. Système d'essieux (1) selon l'une quelconque des revendications précédentes, **caractérisé en ce que** le premier essieu (10) et un second essieu (20) sont disposés sur un véhicule de traction et au moins un autre second essieu (20) est disposé sur une remorque de véhicule.

18. Système d'essieux (1) selon l'une quelconque des revendications précédentes, **caractérisé en ce qu'**au moins deux seconds essieux (20) sont de préférence formés sur une remorque de véhicule, qui peuvent être commandés individuellement par une commande à distance tandis que la direction basée sur la compensation d'angle de braquage est désactivée, et la direction basée sur la commande à distance est désactivée et la direction basée sur la compensation d'angle de braquage est effectuée en fonction d'une vitesse du véhicule.

19. Système d'essieux (1) selon l'une quelconque des revendications précédentes, **caractérisé en ce que** le composant fonctionnel est assemblé à l'élément de fixation, de telle manière qu'il opère comme ailette de refroidissement pour le fluide dans l'élément de fixation.

20. Système d'essieux (1) selon l'une quelconque des revendications précédentes, **caractérisé en ce que** le second essieu (20) est amené en position de braquage nul et opère comme essieu rigide, lorsque le module hydraulique (30) et/ou son appareil de commande (40) est en panne ou présente un fonctionnement défectueux.

21. Procédé de direction pour un système d'essieux (1) d'un véhicule selon l'une quelconque des revendications précédentes, de préférence d'un véhicule utilitaire et/ou d'une remorque de véhicule utilitaire, avec au moins un premier essieu orientable (10) et au moins un second essieu orientable (20), **caractérisé en ce qu'**un module hydro-électrique (30) oriente le second essieu (20).

22. Procédé de direction selon la revendication 21, **caractérisé en ce que** l'on change la puissance de fonctionnement du module hydraulique (30), de préférence on réduit la puissance de fonctionnement ou on coupe le module hydraulique (30), en fonction d'une compensation d'angle de braquage entre un angle de braquage pour le premier essieu (10) et un angle de braquage pour le second essieu (20).

23. Véhicule, en particulier véhicule utilitaire et/ou remorque de véhicule utilitaire, comportant un système d'essieux (1) selon l'une quelconque des revendications 1 à 20.
